# EUROPÄISCHE PATENTSCHRIFT

(11) **EP 2 508 778 B1**
(45) Veröffentlichungstag und Bekanntmachung des Hinweises auf die Patenterteilung: **07.08.2019**
(21) Anmeldenummer: 12153408.5
(22) Anmeldetag: 01.02.2012
(51) Int. Cl.: F16H 57/04

(54) **Zahnrad sowie Getriebe-Antriebseinheit**
Gear wheel and gear-drive unit
Roue dentée ainsi qu'unité d'entraînement d'engrenage

(30) Priorität: 28.03.2011 DE 102011006276
(43) Veröffentlichungstag der Anmeldung: 10.10.2012
(73) Patentinhaber: Robert Bosch GmbH, 70442 Stuttgart (DE)
(72) Erfinder: Dornhoefer, Gerd, 71229 Leonberg (DE); Moench, Jochen, 76547 Sinzheim (DE); Hinterkausen, Markus, 71701 Schwieberdingen (DE); Roger, Julien, 70839 Gerlingen (DE); Schmiederer, Dirk, 70806 Kornwestheim (DE); Hilzinger, Juergen, 71272 Renningen (DE)

(56) Entgegenhaltungen:
- EP-A2- 2 208 915
- WO-A1-2004/020876
- DE-A1-102009 000 210
- GB-A- 1 209 792
- JP-A- 10 203 436

## Beschreibung

### Stand der Technik

Die Erfindung betrifft ein Zahnrad nach dem Oberbegriff des Anspruchs 1. Ferner betrifft die Erfindung eine Getriebe-Antriebseinheit unter Verwendung eines erfindungsgemäßen Zahnrades.

Ein Zahnrad nach dem Oberbegriff des Anspruchs 1 ist bereits allgemein bekannt und wird insbesondere als Bestandteil einer Getriebe-Antriebseinheit in Kraftfahrzeugen, beispielsweise als Sitzverstellungsantrieb, Fensterheberantrieb, Scheibenwischerantrieb oder ähnlichem verwendet. Hierbei wird mittels eines mit einem elektrischen Antriebsmotor gekoppelten Getriebes die Drehzahl des Antriebsmotors unter gleichzeitiger Erhöhung des Drehmoments herabgesetzt, um beispielsweise einen Sitz oder eine Fensterscheibe im Kraftfahrzeug verstellen zu können. Das Getriebe weist wenigstens ein Zahnrad auf, das insbesondere aus Kunststoff besteht, wobei dessen Zähne in Wirkverbindung mit einem mit dem Zahnrad zusammenwirkenden, eine Gegenverzahnung aufweisenden Gegenelement stehen. Die Kontaktfläche zwischen den Zähnen des Zahnrads und der Gegenverzahnung am Gegenelement ist über die Lebensdauer der Antriebseinheit einem Verschleiß ausgesetzt. Daher ist es beim Stand der Technik bekannt, das innerhalb eines Gehäuses angeordnete Zahnrad des Getriebes beim Zusammenbau Getriebes mit einem Fettdepot zu versorgen, das z.B. im Bereich der Seitenflächen des Zahnrads in Form einer Fett- bzw. Schmiermittelmenge aufgebracht wird.

Nachteilig dabei ist, dass das Fett aus dem Kontaktbereich mit zunehmender Laufzeit der Getriebe-Antriebseinheit zur Seite geschoben, aber auch abgeschleudert wird. Es ist daher möglich, insbesondere wenn die Menge des reibnahen Fettdepots relativ klein ist, dass es während des Betriebs zu Mangelschmierungszuständen kommen kann. Diese Mangelschmierung führt zu einer starken Reiberhöhung, die wiederum zu einer verringerten Abgabeleistung und zu einem erhöhten Verschleiß des Zahnrads führt. Ferner kann es durch die erhöhte Reibleistung zu einer erhöhten Wärmeabgabe und zum Anschmelzen oder Erweichen des üblicherweise aus Polymerwerkstoff bestehenden Zahnrads kommen, was im schlimmsten Fall zu einem Getriebeausfall führen kann. Bei der Montage der Getriebe-Antriebseinheit wird versucht, dass Fett möglichst nahe an die Reibstelle heranzubringen. Dies erfolgt üblicherweise dadurch, dass das Schmiermittel bzw. Fett auf die Zahnflanken an einer Seitenfläche des Zahnrads zwischen der Drehachse des Zahnrads und den Zähnen angeordnet bzw. aufgebracht wird.

Aus der DE 10 2009 000 210 A1 der Anmelderin ist es darüber hinaus bekannt, ein Element in Form eines Zahnrads mit einer schmiermittelgeschmierten Oberfläche zu versehen, wobei die Oberfläche mit einer dem Schmiermittel eine Vorzugsfließrichtung vorgebenden Oberflächenkapillarstruktur versehen ist. Hierbei ist auch eine Ausführungsform beschrieben, bei der Fließkanäle an einer Zahnoberfläche ausgebildet sind, die in einer Richtung im Wesentlichen quer zur Zahnradbreite angeordnet sind. Weiterhin sind der vorbekannten Schrift keinerlei Maßnahmen entnehmbar, wie das Fett in den Zahnbereich bzw. in den Reibbereich des Zahnrades gelangen soll.

Mit der WO2004/020876A1 ist ein Zahnrad bekannt geworden, bei dem durchgehende axiale Längsrillen zur Schmiermittelversorgung einer Zahnflanke angeordnet sind. Die JP 10203436A zeigt ebenfalls Zahnflanken eines Zahnrads mit Längsrillen- Dabei sind in den Zahnflanken Schmiermitteldepots ausgespart, die mit den Längsrillen verbunden sind, entsprechend dem Oberbegriff des Anspruchs 1.

### Offenbarung der Erfindung

Ausgehend von dem dargestellten Stand der Technik liegt der Erfindung die Aufgabe zugrunde, ein Zahnrad nach dem Oberbegriff des Anspruchs 1 derart weiterzubilden, dass eine Versorgung eines reibungskritischen Bereiches am Zahnrad aus dem radialen Zwischenbereich zwischen der Drehachse des Zahnrads und dem Bereich der Zähne auf möglichst einfache und gleichzeitig effektive Art und Weise sichergestellt ist. Diese Aufgabe wird bei einem Zahnrad mit den Merkmalen des Anspruchs 1 gelöst.

Vorteilhafte Weiterbildungen des erfindungsgemäßen Zahnrads sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Zur Optimierung der Depotwirkung der wenigstens einen Rille sowie zur Schaffung der Möglichkeit, die wenigstens eine Längsrille mit einem zusätzlichen Schmiermitteldepot zu verbinden, ist es besonders bevorzugt vorgesehen, dass die wenigstens eine Längsrille von wenigstens einer Seitenfläche des Zahnrads, insbesondere vom Bereich der Zahnflankenkante des Zahns, ausgeht.

Die Tragfähigkeit der Zähne lässt sich darüber hinaus erhöhen, wenn die Reibfläche eine geringere Rauigkeit aufweist als der Zahnfußbereich der Zahnflankenoberfläche.

Um die Gefahr von Zahnbrüchen infolge der Kerbwirkung von Längsrillen zu vermeiden bzw. herabzusetzen, ist es darüber hinaus in einer weiteren Ausgestaltung der Erfindung vorgesehen, dass der Zahnfußbereich rillenfrei ausgebildet ist.

In weiterer konstruktiver Ausgestaltung der Längsrillen haben sich diese als besonders vorteilhaft herausgestellt, wenn diese eine Breite und Tiefe zwischen 5µm und 50µm, insbesondere 20µm aufweisen, und wenn beim Vorhandensein mehrere Längsrillen diese bevorzugt parallel zueinander mit einem Abstand von insbesondere etwa 20µm angeordnet sind.

In einer weiteren, ganz besonders bevorzugten Ausgestaltung der Erfindung ist es vorgesehen, dass die wenigstens eine Längsrille im Bereich des Zahns von einem außerhalb des Zahns angeordneten Depot zusätzlich mit Schmiermittel versorgt wird. Hierbei ist es konstruktiv vorgesehen, dass in einem radialen Zwischenbereich zwischen der Drehachse und den Zähnen wenigstens ein Depot für Schmiermittel zur zusätzlichen Versorgung der Reibflächen der Zähne angeordnet ist, wobei der Zwischenbereich wenigstens eine Ausnehmung zur Ausbildung des Depots aufweist, und wobei zwischen der Ausnehmung für das Depot und dem Bereich der Zähne an einer Oberfläche wenigstens einer der Seitenflächen des Zahnrads wenigstens eine Schmiermittelführung, insbesondere in Form einer Zuführrille ausgebildet ist, die die Ausnehmung bzw. das Depot mit dem Bereich der Zähne verbindet.

Um den Schmiermitteltransport zu vereinfachen wird es insbesondere vorgeschlagen, dass die Zuführrille im Bereich wenigstens einer stetigen, insbesondere einer ebenen Seitenfläche des Zahnrads ausgebildet ist. Dadurch ergibt sich ein besonders einfaches Fließen des Schmiermittels aus dem Depot in Richtung des Bereichs der Zähne.

Bei Versuchen hat es sich herausgestellt, dass es wesentlich für eine sichere und zuverlässige Schmiermittelversorgung der Zähne ist, dass das Schmiermittel auf möglichst kurzem Wege zugeführt wird, und dass die Führung des Schmiermittels möglichst keine abrupten Richtungswechsel des Schmiermittels erfordern. Daher ist es in einer besonders bevorzugten Ausgestaltung der Erfindung vorgesehen, dass die Zuführrille, ausgehend von der Ausnehmung für das Depot, einen im Wesentlichen zur Drehachse gerichteten ersten Abschnitt aufweist, der in einem gebogenen zweiten Abschnitt übergeht, wobei der zweite Abschnitt in Höhe der Reibfläche an einer Zahnflankenkante endet.

Wichtig ist es auch, dass der Übergang von der Seitenfläche in die Längsrille für das Schmiermittel möglichst sanft, das heißt ohne abrupten Richtungswechsel erfolgt. Hierzu kann es vorgesehen sein, dass der Übergangsbereich von der Zuführrille in die Längsrille an der Zahnflankenkante gerundet ausgebildet ist.

Ein erfindungsgemäßes Zahnrad lässt sich fertigungstechnisch besonders einfach mit dem zusätzlichen Depot sowie den Längsrillen ausbilden, wenn es aus Kunststoff besteht und als Spritzgussteil ausgebildet ist, wobei die wenigstens eine Längsrille und/oder die Ausnehmung für das Depot während des Spritzprozesses durch eine entsprechende Ausgestaltung des Spritzgusswerkzeuges ausgebildet wird.

Die angeführten Maßnahmen führen insgesamt zu einer Reduzierung der Wärmebelastung des Zahnrads. Daher kann gegenüber dem Stand der Technik, bei denen als Kunststoff für das Zahnrad beispielsweise Polymere wie PA, PBT oder PEEK eingesetzt wird, ein Kunststoff mit einem niedrigeren Schmelzpunkt, vorzugsweise POM, eingesetzt werden.

Um entweder über die Lebensdauer des Zahnrads betrachtet in der Getriebe-Antriebseinheit nur eine möglichst geringe Menge an Schmiermittel einbringen zu müssen bzw. zu vermeiden, dass Schmiermittel an Stellen gerät, die nicht geschmiert werden müssen, sieht eine weitere Ausgestaltung der Erfindung vor, dass die Ausnehmung für das Depot in Höhe der Seitenfläche in dem nicht mit der Zuführrille verbundenen Bereich mit wenigstens einer scharfkantig ausgebildeten Kante und/oder die Seitenfläche in dem nicht mit der Zuführrille verbundenen Bereich mit einer relativ glatten Oberfläche ausgebildet ist.

Weiterhin sieht eine bevorzugte Ausgestaltung vor, dass die wenigstens eine Längsrille und ggf. die Zuführrille mit Maßnahmen zur Ausbildung einer Kapillarwirkung für das Schmiermittel in Richtung der Reibfläche versehen ist. Dadurch lässt sich eine gezielte Richtung der Bewegung des Schmiermittels hin zur Reibfläche erzeugen.

Die Erfindung umfasst auch eine Getriebe-Antriebseinheit, insbesondere einen Fensterheberantrieb, einen Sitzverstellungsantrieb, einen Scheibenwischerantrieb oder ähnlichem mit einem Antriebsmotor und einem mit dem Antriebsmotor gekoppelten Getriebe, wobei das Getriebe wenigstens ein erfindungsgemäßes Zahnrad aufweist. Eine derartige Getriebe-Antriebseinheit neigt über die Lebensdauer betrachtet zu einem geringen Verschleiß bzw. es wird ermöglicht, bei gleicher Funktionalität die Getriebe-Antriebseinheit in verkleinerter Größe bzw. mit geringeren Herstellkosten zu realisieren.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Getriebe-Antriebseinheit in stark vereinfachter Darstellung,
- Fig. 2: ein Zahnrad, wie es bei einer Getriebe-Antriebseinheit der Fig. 1 verwendet wird, in einer Seitenansicht,
- Fig. 3: eine perspektivische Teilansicht des erfindungsgemäßen Zahnrads im Bereich eines seiner Zähne und
- Fig. 4: eine Darstellung mehrerer Längsrillen, die an einer Zahnflankenoberfläche eines Zahnes gemäß der Fig. 3 angeordnet sind, in einer Schnittdarstellung.

Gleiche Bauteile bzw. Bauteile mit gleicher Funktion sind in den Figuren mit den gleichen Bezugsziffern versehen.

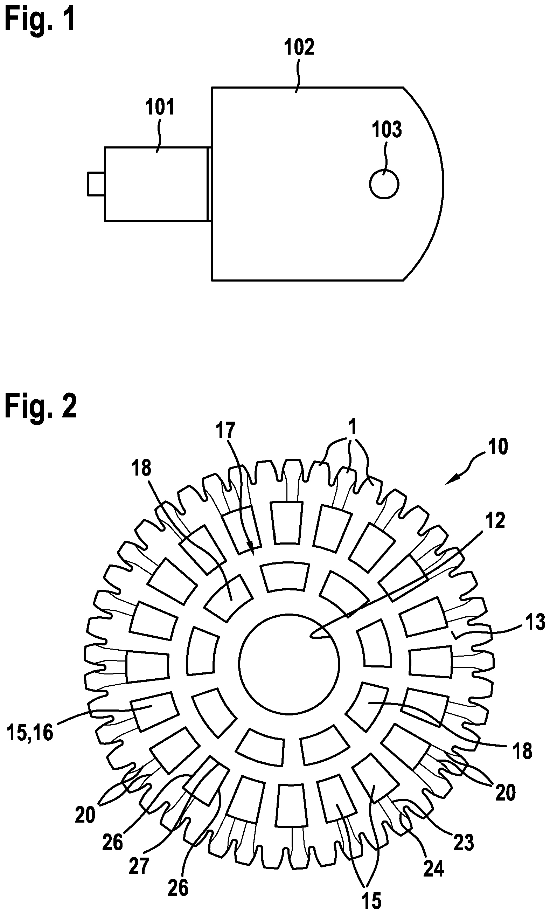

In der Fig. 1 ist stark vereinfacht eine Getriebe-Antriebseinheit 100 dargestellt. Die Getriebe-Antriebseinheit 100 dient insbesondere als Fensterheberantrieb, Sitzverstellungsantrieb, Scheibenwischerantrieb oder ähnlichem in einem Kraftfahrzeug. Die Getriebe-Antriebseinheit 100 weist einen als Elektromotor ausgebildeten Antriebsmotor 101 auf, der an einer Seitenfläche eines Getriebegehäuses 102 angeflanscht ist. In dem Getriebegehäuse 102 ist ein in den Figuren nicht dargestelltes Getriebe angeordnet, das eine relativ hohe Drehzahl des Antriebsmotors 101 unter gleichzeitiger Erhöhung des Drehmoments reduziert und damit eine entsprechende Drehbewegung einer Abtriebswelle 103 der Getriebe-Antriebseinheit 100 erzeugt. Die Abtriebswelle 103 ist wiederum zumindest mittelbar mit dem zu bewegenden Objekt, beispielsweise einem Sitz oder einer Fensterscheibe mechanisch verbunden.

In der Fig. 2 ist ein erfindungsgemäßes Zahnrad 10 dargestellt, das als Bestandteil des angesprochenen Getriebes in der Getriebe-Antriebseinheit 100 verwendet wird. Das Zahnrad 10 besteht insbesondere aus Kunststoff und ist im Spritzgussverfahren hergestellt. Als kostengünstiges Material kann dabei aufgrund der erfindungsgemäßen Ausbildung des Zahnrads 10 POM (Polyoxymethylen) verwendet werden.

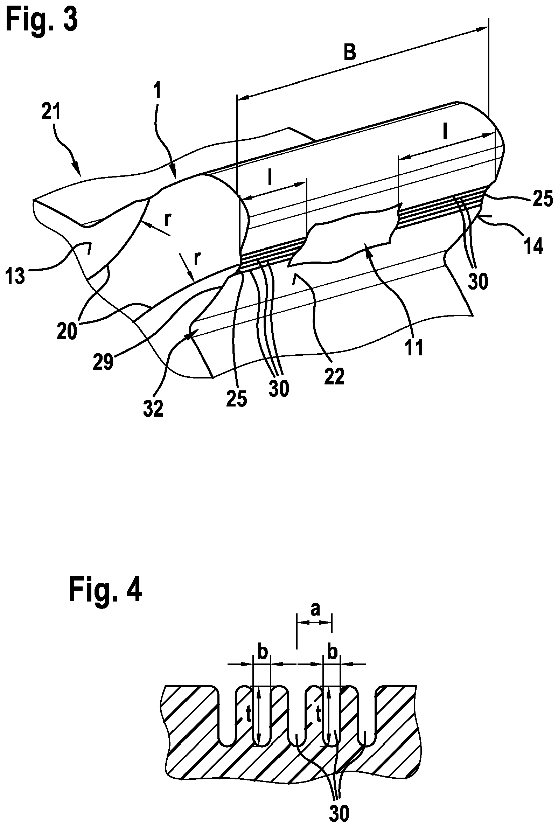

Das Zahnrad 10 weist an seinem Außenumfang bevorzugt eine Vielzahl von Zähnen 1 auf, die im Ausführungsbeispiel eine Geradverzahnung ausbilden. Selbstverständlich ist es auch denkbar, dass die Zähne 1 eine Schrägverzahnung ausbilden. Die Zähne 1 des Zahnrades 10 wirken mit einer Gegenverzahnung eines nicht dargestellten Gegenelements, beispielsweise einer mit dem Antriebsmotor 101 verbundenen Antriebsschnecke, zusammen. Hierbei ist der Bereich, in dem ein Zahn 1 mit der entsprechenden Gegenverzahnung kämmt, in der Fig. 3 als Reibfläche 11 bezeichnet. Die Reibfläche 11 ist in dem in der Fig. 3 dargestellten Ausführungsbeispiel in etwa im mittleren Bereich eines Zahns 1 des Zahnrads 10 angeordnet. Während es Betriebs der Getriebe-Antriebseinheit 100 kommt es insbesondere zu einem Verdrängen von Schmiermittel aus der Reibfläche 11 bzw. in Richtung des Randbereichs der Reibfläche 11.

Das Zahnrad 10 weist in seiner Längsachse eine Bohrung 12 zur Lagerung des Zahnrads 10 z.B. in einem Achsstummel auf, der in dem Getriebegehäuse 102 angeordnet ist. Über die Bohrung 12 ist das Zahnrad 10 in der Getriebe-Antriebseinheit 100 drehbar angeordnet, so dass die Bohrung 12 gleichzeitig die Drehachse des Zahnrads 10 ausbildet.

Sowohl aus fertigungstechnischen Gründen, insbesondere aufgrund der Schwindung des Materials, als auch z.B. aus Gründen eines möglichst geringen Gewichts, weist das Zahnrad 10 im Bereich der vorzugsweise ebenen Seitenflächen 13, 14 eine Vielzahl von Ausnehmungen 15,18 auf, die während der Herstellung des Zahnrads 10 durch eine entsprechend Formgebung bzw. Ausbildung des Spritzgusswerkzeuges ausgebildet bzw. hergestellt werden. Hierbei bilden die einen Ausnehmungen 15 in einem in Bezug auf die Bohrung 12 radial äußeren Bereich Aufnahmekammern bzw. Depots 16 zur Aufnahme bzw. Speicherung des nicht dargestellten Schmiermittels, insbesondere Fett, aus. Die Depots 16 sind über einen radial umlaufenden Zwischensteg 17 von den radial inneren Ausnehmungen 18 getrennt.

Im Ausführungsbeispiel weist das Zahnrad 10 eine Vielzahl von Depots 16 bzw. ersten Ausnehmungen 15 auf, die in gleichmäßigen Winkelabständen über das Zahnrad 10 verteilt angeordnet sind. Wie insbesondere anhand der Fig. 2 und 3 erkennbar ist, ist es vorgesehen, dass an der Oberfläche der Seitenflächen 13 und 14 des Zahnrads 10 Zuführrillen 20 ausgebildet sind, die den Bereich der Depots 16 mit dem radial weiter außen liegenden Bereich 21 verbinden, in dem die Zähne 1 angeordnet sind. Der Einfachhalt halber sind in der Fig. 1 lediglich einige Zuführrillen 20 eingezeichnet. Bevorzugt weist das Zahnrad 10 jedoch eine derartige Anzahl von Zuführrillen 20 auf, dass zumindest diejenigen Zahnflankenoberflächen 22 in Wirkverbindung mit den Zuführrillen 20 angeordnet sind, die entsprechende Reibflächen 11 aufweisen bzw. mit dem angesprochenen Gegenelement zusammenwirken. Zur Vereinfachung des Transports des Schmiermittels über die Seitenflächen 14, 14 ist deren Oberfläche zumindest stetig, vorzugsweise eben ausgebildet, so dass sie in Fließrichtung des Schmiermittels insbesondere keine Kanten, Sprünge o.ä. aufweist.

Vorteilhafterweise bestehen die Zuführrillen 20 jeweils aus einem im Ausführungsbeispiel geradlinig ausgebildeten ersten Abschnitt 23, der in Richtung des Bereichs 21 in einen gebogenen Abschnitt 24 übergeht. Der gebogene Abschnitt 24 mündet wiederum im Bereich 21 des Zahns 1 an einer Zahnflankenkante 29 in Höhe etwa der Reibfläche 11 (Fig.3). Während der geradlinige Abschnitt 23, der von der dem Zahn 1 abgewandten Seite des Depots 16 vom Rand der Ausnehmung 15 ausgeht, zur Bohrung 12 hin ausgerichtet ist, weist der gebogene Abschnitt 24 vorzugsweise einen möglichst großen Krümmungsradius r auf. Durch eine derartige Ausbildung der Zuführrillen 20 wird insbesondere ein möglichst kurzer Transportweg für das Schmiermittel aus dem jeweiligen Depot 16 in Richtung des bzw. der zugeordneten Zähne 1 ermöglicht. Wichtig ist es auch, dass der Übergang von den Seitenflächen 13, 14 auf die Zahnflankenoberflächen 22 im Bereich der Zahnflankenkanten 29 über vorzugsweise gerundete Zahnflankenkantenabschnitte 25 möglichst sanft erfolgt, wie dies in der Fig. 3 dargestellt ist.

Um einen Transport von Schmiermittel aus dem Depot 16 in Richtung des Bereichs 21 zu vereinfachen bzw. zu begünstigen, kann es entsprechend der DE 10 2009 000 210 A1 der Anmelderin vorgesehen sein, dass die Zuführrillen 20 in Richtung zum Bereich 21 einen verringerte Querschnittsfläche aufweisen, um einen Transport des Schmiermittels durch die Kapillarwirkung zu erhöhen.

Um zu vermeiden, dass Fett von dem Depot 16 in andere Bereiche des Zahnrads 10 gelangt, die insbesondere nicht geschmiert werden sollen, ist es weiterhin vorgesehen, dass die Kanten 26, 27, die die Ausnehmungen 15 bzw. die Depots 16 im Bereich der Seitenfläche 13, 14 begrenzen, möglichst scharfkantig bzw. mit einem möglichst geringen Krümmungsradius ausgebildet sind. Hierbei ist der Krümmungsradius derart klein zu wählen, wie dies aus fertigungstechnischen Gründen unter Berücksichtigung der Fertigungskosten möglich ist. Darüber hinaus sind insbesondere die Seitenflächen 13, 14 bzw. Bereiche, in denen kein Transport von Schmiermittel stattfinden soll, mit einer möglichst geringen Rauigkeit zu versehen.

Wie aus einer Zusammenschau der Fig. 3 und 4 erkennbar ist, münden die Zuführrillen 20 im Bereich eines Zahns 1 an der die Zahnflanke begrenzenden Zahnflankenkante 29 in Höhe der Reibfläche 11. Von der Zahnflankenkante 29 bzw. dem Zahnflankenkantenabschnitt 25 gehen parallel zum Zahn 1 ausgerichtete Längsrillen 30 aus, wobei es besonders bevorzugt vorgesehen ist, dass von beiden Seitenflächen 13, 14 des Zahnrades 10 entsprechende Längsrillen 30 ausgehen. Diese Längsrillen 30 reichen bis an die Reibfläche 11 heran, wobei die Reibfläche 11 selbst jedoch keine Längsrillen 30 aufweist. Die Länge I der Längsrillen 30, die von beiden Seitenflächen 13, 14 des Zahnrades 10 ausgehen, ist bevorzugt in etwa gleichlang ausgebildet und beträgt etwa ein Viertel der gesamten Zahnradbreite B. Insbesondere ist es vorgesehen, dass die Länge I der jeweils von beiden Seitenflächen 13, 14 ausgehenden Längsrillen 30 zusammen, bezogen auf die Zahnradbreite B, zwischen 30 % und 70 %, bevorzugt 45 % bis 55 % der Zahnradbreite B beträgt.

Wichtig ist es auch, dass die Längsrillen 30 bevorzugt, wie die Zuführrillen 20, mit einer zusätzlichen Kapillarwirkung in Richtung zur Reibfläche 11 hin ausgestattet sind. Hierzu wird nochmals auf die DE 10 2009 000 210 A1 der Anmelderin verwiesen, in der derartige Maßnahmen offenbart sind. Somit bilden die Längsrillen 30 ein weiteres Depot für das Schmiermittel aus, da das Schmiermittel sich immer in Richtung der Reibfläche 11 bewegt, wenn dort Schmiermittel verbraucht wird.

Auch die Längsrillen 30 und die Zahnflankenkantenabschnitte 25 werden, ebenso wie die Zuführrillen 20, bevorzugt bereits während der Herstellung des Zahnrads 10 berücksichtigt bzw. durch eine entsprechende Formgebung des Spritzgusswerkzeugs erzeugt. Wie insbesondere anhand der Fig. 4 erkennbar ist, weisen die Längsrillen 30 eine Breite b und eine Tiefe t von zwischen 5µm und 50µm, insbesondere 20µm auf. Weiterhin beträgt der Abstand a beim Vorhandensein mehrere Längsrillen 30 vorzugsweise etwa 20µm.

Wichtig ist auch, dass der Zahnfußbereich 32 eines Zahns 1 keine Längsrillen 30 aufweist sowie bevorzugt eine größere Rauigkeit, z.B. R27 hat als die Reibfläche 11, die beispielsweise eine Rauigkeit von R21 aufweist.

Das soweit beschriebene erfindungsgemäße Zahnrad 10 bzw. die Getriebe-Antriebseinheit 100 können in vielfältiger Art und Weise abgewandelt bzw. modifiziert werden, ohne vom Erfindungsgedanken abzuweichen. Dieser besteht in dem Vorsehen bzw. der Ausbildung wenigstens einer Längsrille 30 im Bereich des Zahns 1. So ist es selbstverständlich auch denkbar, dass das Zahnrad 10 nicht aus Kunststoff, sondern aus Metall ausgebildet sein kann. Weiterhin kann auf die Ausbildung der Zuführrillen 20 verzichtet werden, die die Depots 16 mit den Längsrillen 30 verbinden. In diesem Fall bilden die Längsrillen 30 das einzige Schmiermitteldepot aus. In einer weiteren Ausgestaltung der Erfindung ist es auch denkbar, dass die Längsrillen 30 als über die gesamte Breite B des Zahns 1 verlaufende Längsrillen 30 ausgebildet sind, oder erst beabstandet von der Zahnflankenkante 29 beginnen und zum Beispiel auch bis in den Bereich der Reibfläche 11 hineinreichen, insbesondere, wenn die Tragfähigkeit der Zähne 1 für den Anwendungsfall nicht kritisch ist.

## Patentansprüche

1. Zahnrad (10), das in einer Drehachse gelagert ist und an dessen Umfang bevorzugt eine Vielzahl von Zähnen (1) zum Übertragen eines Drehmoments an ein mit dem Zahnrad (10) zusammenwirkendes Gegenelement angeordnet sind, wobei ein Reibbereich (11) zwischen einem Zahn (1) und dem Gegenelement an einer Zahnflankenoberfläche (22) mit Schmiermittel versehen ist, wobei an der Zahnflankenoberfläche (22) wenigstens eine Längsrille (30) zur Zuführung des Schmiermittels in Richtung zum Reibbereich (11) ausgebildet ist,
**dadurch gekennzeichnet, dass** die wenigstens eine Längsrille (30) bis zur Reibfläche (11) reicht, die Reibfläche (11) **im mittleren Bereich des Zahns (1) angeordnet ist und rillenfrei** ausgebildet ist **wodurch eine hohe hydrodynamische Tragfähigkeit einer Zahnflanke des Zahns (1) ermöglicht wird, und** von beiden Seitenflächen (13, 14) des Zahnrads (10) jeweils wenigstens eine Längsrille (30) ausgeht, dass die Längsrillen (30) in etwa gleich lang ausgebildet sind, und dass die Länge (I) der jeweils von beiden Seitenflächen (13, 14) ausgehenden Längsrillen (30) zusammen, bezogen auf die Zahnradbreite (B), zwischen 30 % und 70 % beträgt.

2. Zahnrad nach Anspruch 1,
**dadurch gekennzeichnet,**
**dass** die wenigstens eine Längsrille (30) von wenigstens einer Seitenfläche (13, 14) des Zahnrads (10), insbesondere vom Bereich der Zahnflankenkante (29) des Zahns (1), ausgeht.

3. Zahnrad nach Anspruch 1 oder 2,
**dadurch gekennzeichnet,**
**dass der Zahnfußbereich (32) eines Zahns eine größere Rauigkeit hat als die Reibfläche (11).**

4. Zahnrad nach einem der Ansprüche 1 bis 3,
**dadurch gekennzeichnet,**
**dass** die Reibfläche (11) eine geringere Rauigkeit aufweist als der Zahnfußbereich (32) der Zahnflankenoberfläche (22).

5. Zahnrad nach einem der Ansprüche 1 bis 4,
**dadurch gekennzeichnet,**
**dass** der Zahnfußbereich (32) rillenfrei ausgebildet ist.

6. Zahnrad nach einem der Ansprüche 1 bis 5,
**dadurch gekennzeichnet,**
**dass** die Länge (I) der jeweils von beiden Seitenflächen (13, 14) ausgehenden Längsrillen (30) zusammen, bezogen auf die Zahnradbreite (B) 45 % bis 55 % der Zahnradbreite (B) beträgt.

7. Zahnrad nach einem der Ansprüche 1 bis 6,
**dadurch gekennzeichnet,**
**dass** die Breite (b) und Tiefe (t) der Längsrille (30) zwischen 5µm und 50µm, insbesondere 20µm beträgt, und dass beim Vorhandensein mehrere Längsrillen (30) diese bevorzugt parallel zueinander mit einem Abstand (a) von insbesondere etwa 20µm angeordnet sind.

8. Zahnrad nach einem der Ansprüche 1 bis 7,
**dadurch gekennzeichnet,**
**dass** in einem radialen Zwischenbereich zwischen der Drehachse und den Zähnen (1) wenigstens ein Depot (16) für Schmiermittel zur zusätzlichen Versorgung der Reibflächen (11) der Zähne (1) angeordnet ist, wobei der Zwischenbereich wenigstens eine Ausnehmung (15) zur Ausbildung des Depots (16) aufweist, und wobei zwischen der Ausnehmung (15) für das Depot (16) und dem Bereich (21) der Zähne (1) an einer Oberfläche wenigstens einer der Seitenflächen (13, 14) des Zahnrads (10) wenigstens eine Schmiermittelführung, insbesondere in Form einer Zuführrille (20) ausgebildet ist, die die Ausnehmung (15) bzw. das Depot (16) mit dem Bereich (21) der Zähne (1) verbindet.

9. Zahnrad nach einem der Ansprüche 2 bis 8,
**dadurch gekennzeichnet,**
**dass** die wenigstens eine Seitenfläche (13, 14) als stetige, insbesondere als ebene Seitenfläche (13, 14) ausgebildet ist.

10. Zahnrad nach Anspruch 8 oder 9,
**dadurch gekennzeichnet,**
**dass** die Zuführrille (20), ausgehend von der Ausnehmung (15), einen im Wesentlichen zur Drehachse gerichteten ersten Abschnitt (23) aufweist, der in einen gebogenen zweiten Abschnitt (24) übergeht, wobei der zweite Abschnitt (24) im Bereich (21) der Zähne (1) in Höhe der Reibfläche (11) an einer Zahnflankenkante (29) endet.

11. Zahnrad nach einem der Ansprüche 8 bis 10,
**dadurch gekennzeichnet,**
**dass** der Übergangsbereich von der Zuführrille (20) in die Längsrille (30) an der Zahnflankenkante (29) gerundet ausgebildet ist.

12. Zahnrad nach einem der Ansprüche 1 bis 11,
**dadurch gekennzeichnet,**
**dass** das Zahnrad (10) aus Kunststoff - insbesondere aus POM (Polyoxymethylen) - besteht und als Spritzgußteil ausgebildet ist, wobei die wenigstens eine Längsrille (30) und/oder die Ausnehmung (15) für das Depot (16) während des Spritzprozesses durch eine entsprechende Ausgestaltung des Spritzgusswerkzeuges ausgebildet wird.

13. Zahnrad nach einem der Ansprüche 8 bis 12,
**dadurch gekennzeichnet,**
**dass** die Ausnehmung (15) für das Depot (16) in Höhe der Seitenfläche (13, 14) in dem nicht mit der Zuführrille (20) verbundenen Bereich mit wenigstens einer scharfkantig ausgebildeten Kante (26, 27) und/oder die Seitenfläche (13, 14) in dem nicht mit der Zuführrille (20) verbundenen Bereich mit einer relativ glatten Oberfläche ausgebildet ist.

14. Zahnrad nach einem der Ansprüche 1 bis 13,
**dadurch gekennzeichnet,**
**dass** die wenigstens eine Längsrille (30) und ggf. die Zuführrille (20) mit Maßnahmen zur Ausbildung einer Kapillarwirkung für das Schmiermittel in Richtung der Reibfläche (11) versehen ist.

15. Getriebe-Antriebseinheit, insbesondere Fensterheberantrieb, Sitzverstellungsantrieb, Scheibenwischerantrieb oder ähnliches mit einem Antriebsmotor (101) und einem mit dem Antriebsmotor (101) gekoppelten Getriebe, wobei das Getriebe wenigstens ein erfindungsgemäßes Zahnrad nach einem der Ansprüche 1 bis 15 aufweist.

## Claims

1. Gear wheel (10), which is mounted on a rotation axis and on the periphery of which are arranged preferably a multiplicity of teeth (1) for transmitting a torque to a counter-element that cooperates with the gear wheel (10), wherein a friction region (11) between a tooth (1) and the counter-element is provided with a lubricant on a tooth flank surface (22), wherein on the tooth flank surface (22) there is formed at least one longitudinal rill (30) for supplying the lubricant in the direction of the friction region (11),
**characterized in that** the at least one longitudinal rill (30) continues as far as the friction face (11), the friction face (11) **is arranged in the central region of the tooth (1) and** is designed **without rills, thus permitting high hydrodynamic carrying capacity of a tooth flank of the tooth (1), and** at least one longitudinal rill (30) extends from each of the two side faces (13, 14) of the gear wheel (10), **in that** the longitudinal rills (30) are of approximately equal length, and **in that** the length (1) of the longitudinal rills (30) extending from each of the two side faces (13, 14) together amounts to between 30% and 70% of the breadth (B) of the gear wheel.

2. Gear wheel according to Claim 1,
**characterized in that**
the at least one longitudinal rill (30) extends from at least one side face (13, 14) of the gear wheel (10), in particular from the region of the tooth flank edge (29) of the tooth (1).

3. Gear wheel according to Claim 1 or 2,
**characterized in that**
**the tooth root region (32) of a tooth has greater roughness than the friction face (11).**

4. Gear wheel according to one of Claims 1 to 3,
**characterized in that**
the friction face (11) has lower roughness than the tooth root region (32) of the tooth flank surface (22) .

5. Gear wheel according to one of Claims 1 to 4,
**characterized in that**
the tooth root region (32) is designed without rills.

6. Gear wheel according to one of Claims 1 to 5,
**characterized in that**
the length (1) of the longitudinal rills (30) extending from each of the two side faces (13, 14) together amounts to between 45% and 55% of the breadth (B) of the gear wheel based on the breadth (B) of the gear wheel.

7. Gear wheel according to one of Claims 1 to 6,
**characterized in that**
the breadth (b) and depth (t) of the longitudinal rill (30) is between 5 µm and 50 µm, in particular 20 µm, and **in that** when multiple longitudinal rills (30) are present these are preferably arranged parallel to one another with a spacing (a) of in particular approximately 20 µm.

8. Gear wheel according to one of Claims 1 to 7,
**characterized in that**
in a radial intermediate region between the rotation axis and the teeth (1) there is arranged at least one depot (16) for lubricant for the additional supply of the friction faces (11) of the teeth (1), wherein the intermediate region has at least one cutout (15) for forming the depot (16), and wherein between the cutout (15) of the depot (16) and the region (21) of the teeth (1) there is formed on a surface of at least one of the side faces (13, 14) of the gear wheel (10) at least one lubricant supply, in particular in the form of a supply rill (20), which connects the cutout (15) or the depot (16) to the region (21) of the teeth (1).

9. Gear wheel according to one of Claims 2 to 8,
**characterized in that**
the at least one side face (13, 14) is formed as a constant, in particular planar side face (13, 14).

10. Gear wheel according to Claim 8 or 9,
**characterized in that**
the supply rill (20) has, proceeding from the cutout (15), a first section (23) which is oriented essentially to the rotation axis and which transitions into a curved second section (24), wherein the second section (24) ends in the region (21) of the teeth (1) at the level of the friction face (11) at a tooth flank edge (29).

11. Gear wheel according to one of Claims 8 to 10,
**characterized in that**
the transition region from the supply rill (20) to the longitudinal rill (30) at the tooth flank edge (29) is rounded.

12. Gear wheel according to one of Claims 1 to 11,
**characterized in that**
the gear wheel (10) is made of plastic - in particular POM (polyoxymethylene) - and is formed as an injection-moulded part, wherein the at least one longitudinal rill (30) and/or the cutout (15) for the depot (16) is formed during the injection process by means of an appropriate configuration of the injection-moulding tool.

13. Gear wheel according to one of Claims 8 to 12,
**characterized in that**
the cutout (15) for the depot (16) at the level of the side face (13, 14) in the region not connected to the supply rill (20) is formed with at least one sharp edge (26, 27) and/or the side face (13, 14) in the region not connected to the supply rill (20) is formed with a relatively smooth surface.

14. Gear wheel according to one of Claims 1 to 13,
**characterized in that**
the at least one longitudinal rill (30) and, as the case may be, the supply rill (20) are provided with measures for establishing a capillary effect for the lubricant in the direction of the friction face (11).

15. Gear-drive unit, in particular a window lifter drive, seat adjustment drive, wind screen wiper drive or the like having a drive motor (101) and a gear mechanism coupled to the drive motor (101), wherein the gear mechanism has at least one inventive gear wheel according to one of Claims 1 to 14.

## Revendications

1. Roue dentée (10), qui est montée dans un axe de rotation et à la périphérie de laquelle sont disposées une multiplicité de dents (1) permettant de transmettre un couple à un contre-élément coopérant avec la roue dentée (10), dans laquelle une zone de friction (11) entre une dent (1) et le contre-élément sur une surface de flanc de dent (22) est garnie d'agent lubrifiant, dans laquelle au moins une rainure longitudinale (30) est formée sur la surface de flanc de dent (22) pour la fourniture de l'agent lubrifiant en direction de la zone de friction (11),
**caractérisée en ce que** ladite au moins une rainure longitudinale (30) s'étend jusqu'à la face de friction (11), la face de friction (11) est disposée dans la région moyenne de la dent (1) et est dépourvue de rainure, ce qui permet d'obtenir une portance hydrodynamique élevée d'un flanc de dent de la dent (1), et au moins une rainure longitudinale (30) part respectivement des deux faces latérales (13, 14) de la roue dentée (10), **en ce que** les rainures longitudinales (30) sont sensiblement de la même longueur, et **en ce que** la longueur (1) des rainures longitudinales (30) partant respectivement des deux faces latérales (13, 14) ensemble, rapportée à la largeur (B) de la roue dentée, vaut entre 30 % et 70 %.

2. Roue dentée selon la revendication 1, **caractérisée en ce que** ladite au moins une rainure longitudinale (30) part d'au moins une face latérale (13, 14) de la roue dentée (10), en particulier de la région du bord de flanc de dent (29) de la dent (1).

3. Roue dentée selon une revendication 1 ou 2, **caractérisée en ce que** la région de pied de dent (32) d'une dent présente une rugosité plus élevée que la face de friction (11).

4. Roue dentée selon l'une quelconque des revendications 1 à 3, **caractérisée en ce que** la face de friction (11) présente une rugosité plus faible que la région de pied de dent (32) de la surface de flanc de dent (22).

5. Roue dentée selon l'une quelconque des revendications 1 à 4, **caractérisée en ce que** la région de pied de dent (32) est dépourvue de rainure.

6. Roue dentée selon l'une quelconque des revendications 1 à 5, **caractérisée en ce que** la longueur (1) des rainures longitudinales (30) partant respectivement des deux faces latérales (13, 14) ensemble, rapportée à la largeur (B) de la roue dentée, vaut 45 % à 55 % de la largeur (B) de la roue dentée.

7. Roue dentée selon l'une quelconque des revendications 1 à 6, **caractérisée en ce que** la largeur (b) et la profondeur (t) de la rainure longitudinale (30) valent entre 5 µm et 50 µm, en particulier 20 µm, et **en ce que**, en présence de plusieurs rainures longitudinales (30), celles-ci sont de préférence disposées parallèlement l'une à l'autre avec une distance (a) en particulier d'environ 20 µm.

8. Roue dentée selon l'une quelconque des revendications 1 à 7, **caractérisée en ce qu'**au moins un dépôt (16) pour l'agent lubrifiant est disposé dans une région radiale intermédiaire entre l'axe de rotation et les dents (1) en vue d'une alimentation supplémentaire des faces de friction (11) des dents (1), dans laquelle la région intermédiaire présente au moins un évidement (15) pour la formation du dépôt (16), et dans laquelle au moins un guidage d'agent lubrifiant, en particulier sous la forme d'une rainure d'alimentation (20), qui relie l'évidement (15) ou le dépôt (16) à la région (21) des dents (1), est formé entre l'évidement (15) pour le dépôt (16) et la région (21) des dents (1) sur une surface d'au moins une des faces latérales (13, 14) de la roue dentée (10).

9. Roue dentée selon l'une quelconque des revendications 2 à 8, **caractérisée en ce que** ladite au moins une face latérale (13, 14) est formée par une face latérale (13, 14) régulière, en particulier plane.

10. Roue dentée selon une revendication 8 ou 9, **caractérisée en ce que** la rainure d'alimentation (20), partant de l'évidement (15), présente une première section (23) orientée essentiellement vers l'axe de rotation, qui se prolonge en une deuxième section courbe (24), dans laquelle la deuxième section (24) se termine dans la région (21) des dents (1) à hauteur de la face de friction (11) sur un bord de flanc de dent (29).

11. Roue dentée selon l'une quelconque des revendications 8 à 10, **caractérisée en ce que** la zone de transition de la rainure d'alimentation (20) à la rainure longitudinale (30) sur le bord de flanc de dent (29) est de forme arrondie.

12. Roue dentée selon l'une quelconque des revendications 1 à 11, **caractérisée en ce que** la roue dentée (10) est constituée de matière plastique - en particulier de POM (polyoxyméthylène) - et est réalisée sous la forme d'une pièce moulée par injection, dans laquelle ladite au moins une rainure longitudinale (30) et/ou l'évidement (15) pour le dépôt (16) est formé(e) pendant le processus d'injection par une configuration correspondante de l'outil de moulage par injection.

13. Roue dentée selon l'une quelconque des revendications 8 à 12, **caractérisée en ce que** l'évidement (15) pour le dépôt (16) est formé à hauteur de la face latérale (13, 14) dans la région non reliée à la rainure d'alimentation (20) avec au moins un bord à arête vive (26, 27) et/ou la face latérale (13, 14) est formée dans la région non reliée à la rainure d'alimentation (20) avec une surface relativement lisse.

14. Roue dentée selon l'une quelconque des revendications 1 à 13, **caractérisée en ce que** ladite au moins une rainure longitudinale (30) et éventuellement la rainure d'alimentation (20) est dotée de mesures pour la création d'un effet de capillarité pour l'agent lubrifiant en direction de la face de friction (11).

15. Unité d'entraînement d'engrenage, en particulier entraînement de levage de fenêtre, entraînement de réglage de siège, entraînement d'essuie-glace ou similaire avec un moteur d'entraînement (101) et un engrenage couplé au moteur d'entraînement (101), dans lequel l'engrenage présente au moins une roue dentée selon l'invention selon l'une quelconque des revendications 1 à 14.
